# EUROPÄISCHE PATENTSCHRIFT

(11) **EP 3 619 016 B1**
(45) Veröffentlichungstag und Bekanntmachung des Hinweises auf die Patenterteilung: **08.01.2025**
(21) Anmeldenummer: 17743324.0
(22) Anmeldetag: 24.07.2017
(51) Int. Cl.: B27G 19/04, B27G 19/02, B25F 5/00, F16P 3/00

(54) **ELEKTROWERKZEUG UND VERFAHREN ZUM ERKENNEN EINES EREIGNISSES UND/ODER ZUSTANDS EINES ELEKTROWERKZEUGS**
ELECTRIC TOOL AND METHOD FOR IDENTIFYING AN EVENT AND/OR STATE OF AN ELECTRIC TOOL
OUTIL ÉLECTRIQUE ET PROCÉDÉ POUR REPÉRER UN ÉVÉNEMENT ET/OU UN ÉTAT D'UN OUTIL ÉLECTRIQUE

(43) Veröffentlichungstag der Anmeldung: 11.03.2020
(73) Patentinhaber: Festool GmbH, 73240 Wendlingen (DE)
(72) Erfinder: SCHMID, Markus, 73240 Wendlingen am Neckar (DE); RUSCH, Marc, 73728 Esslingen am Neckar (DE); WERNER, Uwe, 8825 Hütten (CH); SOMMER, Remo, 8037 Zürich (CH); STÄUBLI, Tom, 8004 Zürich (CH); NIETLISPACH, Miriam, 5000 Aarau (CH); EVERTZ, Jörg, 8903 Birmensdorf (DE); LÖRTSCHER, Luca, 28003 Madrid (ES)
(74) Vertreter: Patentanwälte Magenbauer & Kollegen Partnerschaft mbB
(86) Internationale Anmeldenummer: PCT/EP2017/068649
(87) Internationale Veröffentlichungsnummer: WO 2019/020165

(56) Entgegenhaltungen:
- WO-A1-2014/105935
- WO-A2-01/26064
- DE-A1- 102015 211 584
- US-A- 4 802 095
- US-A1- 2004 181 951
- US-A1- 2012 036 725
- US-A1- 2014 166 323
- US-A1- 2017 148 351

## Beschreibung

Die Erfindung betrifft ein Elektrowerkzeug gemäß dem Oberbegriff des Patentanspruchs 1, mit einem als Sägeblatt oder Fräser ausgebildeten rotierbaren Werkzeug, einer Sensoreinrichtung zur Erfassung einer mechanischen Größe, die von einer vom Werkzeug ausgehenden Kraft abhängt, sowie einer mit der Sensoreinrichtung kommunikativ gekoppelten Steuereinrichtung, die ausgebildet ist, gemäß der erfassten mechanischen Größe ein Ereignis des Elektrowerkzeugs zu erkennen.

Die WO 2014/105935 beschreibt eine Tischsäge mit einem Kickback-Detektionssystem, das einen Sensor umfasst, der ausgebildet ist, eine Auslenkung einer Welle als skalare Größe zu erfassen. Eine Steuerung vergleicht die erfasste Auslenkung mit einem skalaren Schwellenwert, um festzustellen, ob ein Kickback vorliegt.

Die US 2014/166323 A1 betrifft ein Elektrowerkzeug mit einem 3-Achsen-Beschleunigungssensor. Der Sensor kann dazu verwendet werden, die Beschleunigung eines Griffs des Elektrowerkzeugs zu erfassen. Der Sensor stellt Beschleunigungsinformation für das Werkzeug bereit und insbesondere die Beschleunigung des Griffs, falls er in eine Richtung entgegengesetzt zur Richtung des Bits rotieren sollte, wodurch ein stecken gebliebenes Bit angezeigt wird, oder in dieselbe Richtung wie das Bit, wodurch ein gebrochenes Bit angezeigt wird.

Die WO 01/26064 A2 betrifft eine Tischsäge mit einem Detektionssystem zur Erfassung eines Kickbacks. In Reaktion auf die Erfassung wird die Bewegung des Sägeblatts gestoppt.

Die DE 10 2015 211584 A1 betrifft eine Diagnosevorrichtung für eine Handwerkzeugmaschine. Mit einem Beschleunigungssensor wird eine Vibration erfasst und auf Basis eines Vibrationswerts auf einen Verschleißzustand geschlossen.

Die US 4 802 095 A beschreibt ein System zum Messen eines Werkzeugverschleißes eines Dreh-Schaftfräsers. Das System misst den Verschleiß durch eine Überwachung von Seitenlastkräften auf das Werkzeug während dem Schneiden. Die resultierenden Seitenlastkräfte FRES haben tangentiale FT und radiale FR Komponenten. Die radiale Komponente FR erhöht sich entsprechend mit dem Werkzeugverschleiß. FRES und FT werden direkt gemessen und auf Basis dieser Messungen wird FR mathematisch bestimmt, um eine Indikation des Werkzeugverschleißes bereitzustellen.

Eine Aufgabe der Erfindung besteht darin, das eingangs genannte Elektrowerkzeug so zu modifizieren, dass die durch die Steuereinrichtung durchgeführte Erkennung verbessert wird.

Die Aufgabe wird durch ein Elektrowerkzeug gemäß Anspruch 1 gelöst. Erfindungsgemäß dient die Sensoreinrichtung dazu, eine mechanische Vektorgröße zu erfassen, die von einer von dem Werkzeug ausgehenden Kraft abhängt. Die Richtung der erfassten Vektorgröße entspricht der Richtung, in die das Werkzeug relativ zu einer anderen Komponente des Elektrowerkzeugs drängt. Die mechanische Vektorgröße ist exemplarisch eine Kraft, eine Beschleunigung, eine Geschwindigkeit, eine Auslenkung, eine Deformation und/oder eine mechanische Spannung. Die Steuereinrichtung ist ausgebildet, ein Ereignis und/oder einen Zustand des Elektrowerkzeugs gemäß einer Richtungsänderung der mit der Sensoreinrichtung erfassten mechanischen Vektorgröße zu erkennen. Die Steuereinrichtung ist ausgebildet, als das zu erkennende Ereignis und/oder den Zustand einen Kickback, ein Vorwärtssägen, ein Rückwärtssägen und/oder ein Eintauchen des Werkzeugs in ein Werkstück zu erkennen.

Erfindungsgemäß wird somit eine Vektorgröße erfasst und das Ereignis und/oder der Zustand des Elektrowerkzeugs auf Basis der Richtungsänderung (und optional der Richtung) dieser Vektorgröße erkannt. Dieser Ansatz beruht auf der Erkenntnis, dass das Werkzeug bei bestimmten Ereignissen und/oder Zuständen des Elektrowerkzeugs in bestimmte Richtungen drängt und dass aus diesem Grund die Richtungsänderung (und optional die Richtung) einer mechanischen Vektorgröße, die von der vom Werkzeug ausgehenden Kraft abhängt, ein guter Indikator für die Erkennung dieser Ereignisse und/oder Zustände ist. Durch die erfindungsgemäße Berücksichtigung der Richtungsänderung (und optional der Richtung) der mechanischen Vektorgröße kann insbesondere eine frühzeitigere Ereignis- und/oder Zustandserkennung erfolgen, als wenn die Erkennung bloß auf einer skalaren Größe basiert. Dies liegt daran, dass in der Regel zuerst eine bestimmte Richtung vorliegt und/oder eine bestimmte Richtungsänderung erfolgt, bevor ein bestimmter skalarer Schwellenwert überschritten wird. Mit dem erfindungsgemäßen Elektrowerkzeug kann daher eine besonders frühzeitige - und somit eine verbesserte - Ereignis- und/oder Zustandserkennung erzielt werden.

Die erfasste mechanische Vektorgröße bildet eine Kraft, Beschleunigung, Geschwindigkeit, Auslenkung, eine Deformation oder eine mechanische Spannung ab und ist vorzugsweise zweidimensional. Die mechanische Vektorgröße ist von einer vom Werkzeug ausgehenden Kraft abhängig. Die Richtung der erfassten Vektorgröße entspricht der Richtung der vom Werkzeug ausgehenden Kraft bzw. der Richtung, in die das Werkzeug drängt, und zwar relativ zu einer anderen Komponente des Elektrowerkzeugs. Zweckmäßigerweise wird die Vektorgröße in einem vom Werkzeug ausgehenden Kraftfluss erfasst.

Bei dem durch die Steuereinrichtung zu bestimmenden Zustand handelt es sich insbesondere um einen sogenannten "Kickback" des Elektrowerkzeugs. Mit dem Begriff "Kickback" ist typischerweise ein Ereignis gemeint, bei dem während der Bearbeitung eines Werkstücks durch das Elektrowerkzeug eine plötzliche und unerwartete Kraft zwischen dem Elektrowerkzeug und dem Werkstück auftritt, durch die das Elektrowerkzeug oder das Werkstück dann beschleunigt und in Bewegung versetzt wird. Bei Tischkreissägen führt ein Kickback in der Regel zu einer unerwarteten Beschleunigung des Werkstücks in Richtung des Benutzers. Bei Handkreissägen kann es bei einem Kickback zu unerwarteten Bewegungen des Werkzeugs kommen. Kickbacks können zu Verletzungen des Benutzers führen und stellen daher eine Beeinträchtigung der Betriebssicherheit dar.

Ein Kickback kann insbesondere bei einem ruckartigen, zu schnellen Eintauchen des Werkzeugs in das Werkstück, bei einem Rückwärtssägen, einem Verklemmen des Werkzeugs im Werkstück, bei bestimmten Werkstückeigenschaften (z.B. inhomogenes Holz, Spannungen) und/oder bei einem stumpfen Werkzeug auftreten. Mit der vorstehend beschriebenen Ereigniserkennung anhand der Richtungsänderung (und optional der Richtung) der erfassten mechanischen Vektorgröße lässt sich besonders gut ein Kickback-Ereignis erkennen. Mit dem zu erkennenden Kickback bzw. Kickback-Ereignis ist hier insbesondere auch ein unmittelbar bevorstehender Kickback gemeint, also ein Ereignis, bei dem die Ursachen des Kickbacks bereits gegeben sind, jedoch noch keine bzw. keine signifikante Beschleunigung des Elektrowerkzeugs und/oder des Werkstücks stattgefunden hat. Bevor das Elektrowerkzeug 10 oder das Werkstück durch den Kickback in Bewegung gesetzt bzw. signifikant beschleunigt werden, kündigt sich der Kickback bereits dadurch an, dass der vom Werkzeug ausgehende Kraftvektor seine Richtung ändert. Das Werkzeug drängt also kurz vor einem Kickback bzw. zu Beginn eines Kickbacks in eine andere Richtung als im Normalbetrieb. Dieses Drängen in eine andere Richtung kann durch das Erfassen der mechanischen Vektorgröße detektiert werden, um so darauf zu schließen, dass ein Kickback-Zustand vorliegt.

Ferner kann es sich bei dem zu erkennenden Ereignis um ein Eintauchen des Werkzeugs in das Werkstück, ein Vorwärtssägen oder ein Rückwärtssägen handeln.

Vorteilhafte Weiterbildungen sind Gegenstand der Unteransprüche.

Die Erfindung betrifft ferner ein Verfahren, gemäß Patentanspruch 13, zum Erkennen eines Ereignisses und/oder eines Zustands eines Elektrowerkzeugs mit einem als Sägeblatt oder Fräser ausgebildeten rotierbaren Werkzeug. Das Verfahren umfasst die Schritte: Erfassen einer mechanischen Vektorgröße, nämlich einer Kraft, einer Beschleunigung, einer Geschwindigkeit, einer Auslenkung, einer Deformation und/oder einer mechanische Spannung, die von einer vom Werkzeug ausgehenden Kraft abhängt, wobei die Richtung der erfassten Vektorgröße der Richtung, in die das Werkzeug drängt, entspricht, und Erkennen des Ereignisses und/oder Zustands des Elektrowerkzeugs gemäß einer Richtungsänderung der erfassten mechanischen Vektorgröße. Das Ereignis und/oder der Zustand umfasst einen Kickback, ein Vorwärtssägen, ein Rückwärtssägen und/oder ein Eintauchen des Werkzeugs in ein Werkstück.

Zweckmäßigerweise wird das Verfahren mit einem hier beschriebenen Elektrowerkzeug durchgeführt.

Weitere exemplarische Details sowie beispielhafte Ausführungsformen werden nachstehend unter Bezugnahme auf die Zeichnung erläutert. Dabei zeigt
- Figur 1: eine schematische Darstellung eines Elektrowerkzeugs gemäß einer ersten Ausführungsform,
- Figur 2: ein Diagramm zur Illustration einer Ereignis und/oder Zustandserkennung basierend auf einer Richtung oder Richtungsänderung einer mechanischen Vektorgröße,
- Figur 3: eine Schnittdarstellung eines Elektrowerkzeugs gemäß einer zweiten Ausführungsform,
- Figur 4: eine Schnittdarstellung eines Elektrowerkzeugs gemäß einer dritten Ausführungsform,
- Figur 5: eine Schnittdarstellung eines Elektrowerkzeugs gemäß einer vierten Ausführungsform,
- Figur 6: eine Schnittdarstellung eines Elektrowerkzeugs gemäß einer fünften Ausführungsform,
- Figur 7: eine Schnittdarstellung einer Abtriebswelle und zwei Lagern des Elektrowerkzeugs gemäß der fünften Ausführungsform,
- Figur 8: eine schematische Darstellung eines Elektrowerkzeugs gemäß einer sechsten Ausführungsform und
- Figur 9: ein Blockdiagramm eines Verfahrens.

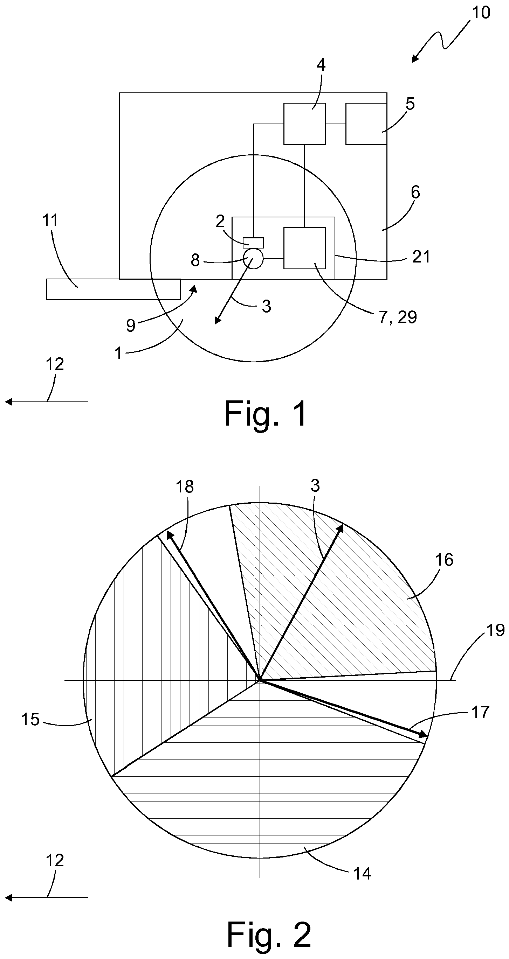

Die Figur 1 zeigt ein Elektrowerkzeug 10 gemäß einer ersten Ausführungsform.

Das Elektrowerkzeug 10 verfügt über ein als Sägeblatt oder Fräser ausgebildetes rotierbares Werkzeug 1, eine Sensoreinrichtung 2 und eine Steuereinrichtung 4. Die Sensoreinrichtung 2 ist ausgebildet, eine mechanische Vektorgröße 3 zu erfassen. Die mechanische Vektorgröße 3 ist eine Kraft, eine Beschleunigung, eine Geschwindigkeit, eine Auslenkung, eine Deformation und/oder eine mechanische Spannung. Ferner hängt die mechanische Vektorgröße 3 von einer Kraft ab, die vom Werkzeug 1 ausgeht. Die Steuereinrichtung 4 ist kommunikativ mit der Sensoreinrichtung 2 verbunden und ausgebildet, ein Ereignis und/oder einen Zustand des Elektrowerkzeugs 10 gemäß einer Richtungsänderung (und optional einer Richtung) der mit der Sensoreinrichtung 2 erfassten mechanischen Vektorgröße 3 zu erkennen.

Dadurch, dass die Ereignis- und/oder Zustandserkennung des Elektrowerkzeugs 10 anhand einer Richtungsänderung (und optional einer Richtung) einer erfassten mechanischen Vektorgröße 3 erfolgt, kann ein Ereignis oder eine Zustandsänderung des Elektrowerkzeugs 10 bereits zu einem sehr frühen Zeitpunkt festgestellt werden. Die Ereignis- und/oder Zustandserkennung wird somit verbessert.

Im Folgenden werden exemplarische Details des Elektrowerkzeugs 10 sowie weitere beispielhafte Ausführungsformen erläutert.

Bei dem Elektrowerkzeug 10 handelt es sich vorzugsweise um eine Säge, insbesondere um eine Handkreissäge oder eine Tauchsäge. Das Elektrowerkzeug 10 kann ferner auch als Flachdübelfräse ausgebildet sein. Das Werkzeug 1 ist insbesondere kreisförmig und dreht sich im Betrieb exemplarisch im Uhrzeigersinn.

Exemplarisch verfügt das Elektrowerkzeug 10 über ein Gehäuse 6, in dem insbesondere die Sensoreinrichtung 2 und die Steuereinrichtung 4 angeordnet sind. An dem Gehäuse 6 ist eine Auflagefläche 9 vorgesehen, mit der das Elektrowerkzeug 10 auf ein zu bearbeitendes Werkstück 11 aufgelegt werden kann.

Das Elektrowerkzeug 10 verfügt über eine Antriebseinrichtung 7. Die Antriebseinrichtung 7 umfasst beispielsweise einen Elektromotor und ein Getriebe. Die Antriebseinrichtung 7 wird vorzugsweise von der Steuereinrichtung 4 angesteuert. Das Elektrowerkzeug 10 verfügt ferner über eine Abtriebswelle 8, die durch die Antriebseinrichtung 7 angetrieben werden kann. Das Werkzeug 1 ist mechanisch mit der Abtriebswelle 8 gekoppelt. Zweckmäßigerweise ist das Werkzeug 1 an der Abtriebswelle 8 befestigt.

Das Elektrowerkzeug 10 verfügt ferner über eine Tragstruktur 21, die zweckmäßigerweise im Gehäuse 6 angeordnet ist. An der Tragstruktur 21 ist beispielsweise die Abtriebswelle 8 gelagert. Ferner kann die Tragstruktur 21 als Gehäuse für die Antriebseinrichtung 7 ausgebildet sein. Die Tragstruktur 21 kann beispielsweise ein Antriebsgehäuse, insbesondere ein Getriebegehäuse darstellen oder umfassen.

Exemplarisch verfügt das Elektrowerkzeug 10 ferner über eine Benutzerschnittstelle 5. Die Benutzerschnittstelle 5 verfügt beispielsweise über eine Eingabevorrichtung, mit der der Benutzer das Elektrowerkzeug 10 z.B. ein- und ausschalten und/oder konfigurieren und/oder kalibrieren kann.

Wie in der Figur 1 gezeigt, liegt das Elektrowerkzeug 10 bei der Bearbeitung des Werkstücks 11 typischerweise mit der Auflagefläche 9 auf dem Werkstück 11 auf und wird in einer Vorschubrichtung 12 relativ zum Werkstück 11 bewegt. Exemplarisch sägen die Sägezähne des Werkzeugs 1 dabei von unten nach oben in das Werkstück 11. In dieser Konstellation drängt das Werkzeug 1 relativ zum restlichen Elektrowerkzeug 10 exemplarisch in Richtung der eingezeichneten mechanischen Vektorgröße 3, also schräg nach unten. Die von dem Werkzeug 1 ausgehende Kraft zeigt insbesondere in die Richtung der mechanischen Vektorgröße 3.

In der Figur 1 ist die Sensoreinrichtung 2 exemplarisch mit der Abtriebswelle 8 gekoppelt und ausgebildet, die mechanische Vektorgröße 3 - nämlich eine Kraft, Beschleunigung, Geschwindigkeit, Auslenkung, Deformation und/oder mechanische Spannung - der Abtriebswelle 8 zu erfassen.

Vorzugsweise ist die Sensoreinrichtung 2 ausgebildet, die mechanische Vektorgröße 3 kontinuierlich zu erfassen, so dass eine Änderung, insbesondere eine Richtungsänderung der mechanischen Vektorgröße 3 erfasst werden kann.

Die Steuereinrichtung 4 ist beispielsweise als Mikrocontroller ausgebildet. Die Steuereinrichtung 4 ist ausgebildet, basierend auf der mechanischen Vektorgröße 3 ein Ereignis und/oder einen Zustand des Elektrowerkzeugs 10 zu bestimmen. Beispielsweise ist die Steuereinrichtung 4 ausgebildet, festzustellen, ob die Richtung der erfassten mechanischen Vektorgröße 3 innerhalb oder außerhalb eines bestimmten Richtungsbereich liegt und basierend auf dieser Feststellung zu entscheiden, ob ein bestimmter Zustand vorliegt oder nicht.

Anhand der Figur 2 soll nachstehend im Detail erläutert werden, wie die Erkennung eines bestimmten Ereignisses und/oder Zustands exemplarisch erfolgen kann.

Die Figur 2 zeigt ein Diagramm mit verschiedenen Richtungsbereichen 14, 15 und 16, zwei Richtungsschwellenwerten 17, 18 und der erfassten mechanischen Vektorgröße 3.

Das Diagramm ist in vier Quadranten aufgeteilt. Jeder Quadrant umfasst 90 Grad. Das Bezugszeichen 19 kennzeichnet die Null-Grad-Linie. Die nachstehend erwähnten Winkelkoordinaten bzw. Gradzahlen sind im mathematisch positiven Drehsinn (Gegenuhrzeigersinn) zu verstehen. Zweckmäßigerweise verläuft die Null-Grad-Linie parallel zur Auflagefläche 9 und/oder zur Vorschubrichtung 12.

Bei den Richtungsbereichen 14, 15 und 16 handelt es sich exemplarisch um zweidimensionale Richtungsbereiche. Die Richtungsbereiche 14, 15 und 16 können hier auch als Winkelbereiche bezeichnet werden.

Zweckmäßigerweise liegen die Richtungsbereiche 14, 15, 16 in einer Ebene. Die Ebene ist zweckmäßigerweise parallel zur Ebene des Werkzeugs 1 bzw. senkrecht zur Axialrichtung der Abtriebswelle 8 ausgerichtet. Die Richtungsbereiche 14, 15, 16 überlappen einander vorzugsweise nicht.

Die Steuereinrichtung 4 ist ausgebildet, wenigstens einen Richtungsbereich 14, 15 oder 16 bereitzustellen. Beispielsweise ist der wenigstens eine Richtungsbereich in einem Speicher in der Steuereinrichtung 4 abgespeichert. Alternativ oder zusätzlich dazu kann die Steuereinrichtung 4 auch ausgebildet sein, den wenigstens einen Richtungsbereich selbst zu erzeugen. Die Steuereinrichtung 4 ist ferner ausgebildet, zu bestimmen, ob die erfasste mechanische Vektorgröße 3 innerhalb oder außerhalb des Richtungsbereichs 14, 15 oder 16 liegt, und basierend auf dieser Bestimmung den Zustand des Elektrowerkzeugs 10 zu erkennen.

Zweckmäßigerweise ist die Steuereinrichtung 4 ausgebildet, eine Mehrzahl von Richtungsbereichen 14, 15, 16 bereitzustellen und verschiedene Ereignisse und/oder Zustände basierend darauf zu erkennen, in welchem der Richtungsbereiche 14, 15, 16 die Richtung der mechanischen Vektorgröße 3 liegt. Insbesondere ist dabei jedem der Richtung Bereiche 14, 15, 16 ein jeweiliges Ereignis und/oder Zustand zugeordnet.

Der erste Richtungsbereich 14 stellt einen Richtungsbereich dar, in dem die mechanische Vektorgröße 3 liegt, wenn das Werkzeug 1 in das Werkstück 1 eingetaucht ist und das Elektrowerkzeug 10 relativ zum Werkstück 1 in Vorschubrichtung 12 bewegt wird. Exemplarisch befindet sich der erste Richtungsbereich 14 in den beiden unteren Quadranten, also innerhalb eines Bereichs zwischen 180 Grad und 360 Grad. In dem gezeigten Beispiel erstreckt sich der erste Richtungsbereich 14 von 220 Grad bis 330 Grad.

Eine mechanische Vektorgröße 3, die in dem ersten Richtungsbereich 14 liegt, ist ein Indikator dafür, dass das Ereignis bzw. der Zustand vorliegt, dass mit dem Elektrowerkzeug 10 in Vorschubrichtung 12 vorwärts gesägt wird. Dementsprechend ist die Steuereinrichtung 4 ausgebildet, zu erkennen, dass ein "Vorwärtssäge-Ereignis" bzw. "Vorwärtssäge-Zustand" vorliegt, wenn die mechanische Vektorgröße 3 in dem ersten Richtungsbereich 14 liegt.

Der zweite Richtungsbereich 15 stellt einen Richtungsbereich dar, in dem die mechanische Vektorgröße liegt, wenn das Werkzeug 1 in das Werkstück 11 eingetaucht ist und das Elektrowerkzeug 10 relativ zum Werkstück 11 entgegengesetzt zur normalen Vorschubrichtung 12 - also in Rückwärtsrichtung bewegt wird. Ferner stellt der zweite Richtungsbereich 15 einen Richtungsbereich dar, in dem die mechanische Vektorgröße 3 liegt, wenn das Werkzeug 1 in das Werkstück 11 eingetaucht wird. Exemplarisch befindet sich der zweite Richtungsbereich 15 in den beiden linken Quadranten, also innerhalb eines Bereichs zwischen 90 Grad und 270 Grad. In dem gezeigten Beispiel erstreckt sich der zweite Richtungsbereich 14 von 125 Grad bis 220 Grad.

Eine mechanische Vektorgröße 3, die in dem zweiten Richtungsbereich 15 liegt, ist ein Indikator dafür, dass das Ereignis bzw. der Zustand vorliegt, dass mit dem Elektrowerkzeug 10 rückwärts gesägt wird oder dass das Werkzeug 1 in das Werkstück 11 eingetaucht wird. Dementsprechend ist die Steuereinrichtung 4 ausgebildet, zu erkennen, dass ein "Rückwärtssäge-Ereignis" bzw. "Rückwärtssäge-Zustand" oder ein "Eintauch-Ereignis" vorliegt, wenn die mechanische Vektorgröße 3 in dem zweiten Richtungsbereich 15 liegt.

Der erste Richtungsbereich 14 und der zweite Richtungsbereich 15 stellen zusammen einen Normalbereich dar. Solange sich die mechanische Vektorgröße 3 in dem Normalbereich befindet, kann die Steuereinrichtung 4 annehmen, dass ein sicherer Betrieb des Elektrowerkzeugs 10 vorliegt und beispielsweise ein entsprechendes Signal bereitstellen.

Der dritte Richtungsbereich 16 stellt einen Richtungsbereich dar, in dem die mechanische Vektorgröße liegt, wenn ein Kickback-Ereignis vorliegt. Exemplarisch befindet sich der dritte Richtungsbereich 16 in den beiden oberen Quadranten, also innerhalb eines Bereichs zwischen 0 Grad und 180 Grad. In dem gezeigten Beispiel erstreckt sich der dritte Richtungsbereich 16 von 5 Grad bis 100 Grad. Zweckmäßigerweise ist die Steuereinrichtung 4 ausgebildet, das Kickback-Ereignis zu erkennen, wenn die mechanische Vektorgröße 3 in dem dritten Richtungsbereich 16 liegt.

Der Richtungsbereich, in dem die Steuereinrichtung 4 auf ein Kickback-Ereignis schließt, kann auch größer definiert werden. Beispielsweise können die Grenzen dieses Richtungsbereichs zwischen die Grenzen des Normalbereichs und die Grenzen des dritten Richtungsbereichs 16 gelegt werden.

Dies ist in der Figur 2 durch die beiden Richtungsschwellenwerte 17, 18 darstellt. Exemplarisch schließen sich die Richtungsschwellenwerte 17, 18 an die Grenzen des Normalbereichs an. Alternativ dazu können die Richtungsschwellenwerte auch auf den Grenzen des Normalbereichs liegen.

Zweckmäßigerweise kann der sich im Uhrzeigersinn von dem zweiten Richtungsschwellenwert 18 zu dem ersten Richtungsschwellenwert 17 erstreckende Richtungsbereich an Stelle des dritten Richtungsbereichs 16 verwendet werden. Der (in der Figur 2 gezeigte) dritte Richtungsbereich 16 ist in diesem Fall optional.

Zweckmäßigerweise ist die Steuereinrichtung 4 ausgebildet, dann, wenn die mechanische Vektorgröße 3 zwischen den beiden Richtungsschwellenwerten 17, 18 - also im Gegenuhrzeigersinn hinter dem ersten Richtungsschwellenwert 17 und vor dem zweiten Richtungsschwellenwert 18 - liegt, das Kickback-Ereignis zu erkennen. Das Kickback-Ereignis kann somit bereits zu einem Zeitpunkt erkannt werden, in dem die Ursache für den Kickback bereits gegeben ist, das Elektrowerkzeug 10 oder das Werkstück 11 jedoch noch nicht signifikant beschleunigt wurden bzw. noch keinen Rückstoß oder Rückschlag ausgeübt haben. Zweckmäßigerweise kann die Steuereinrichtung 4 ausgebildet sein, das Kickback-Ereignis 50ms bis 100 ms vor einer (ohne Erkennung und Reaktion auf den Kickback) auftretenden Beschleunigung des Elektrowerkzeugs 10 gegenüber dem Werkstück 11 zu erkennen. Bei der Beschleunigung handelt es sich beispielsweise um eine Beschleunigung mit einer Komponente nach oben bzw. einer Komponente in 90-Grad-Richtung in dem gezeigten Diagramm.

Die Ereignis- und/oder Zustandserkennung wird basierend auf einer Richtungsänderung der mechanischen Vektorgröße 3 durchgeführt. Optional kann diese Ereignis- und/oder Zustandserkennung basierend auf der Richtungsänderung der mechanischen Vektorgröße 3 zusätzlich zu der vorstehend beschriebenen Ereignis- und/oder Zustandserkennung basierend auf der Richtung der erfassten mechanischen Vektorgröße 3 erfolgen.

Steht beispielsweise ein Kickback unmittelbar bevor, so dreht sich die mechanische Vektorgröße 3 in Richtung hin zu dem dritten Richtungsbereich 16. Die Steuereinrichtung 4 kann dementsprechend ausgebildet sein, basierend auf einer erfassten Drehung der mechanischen Vektorgröße 3 ein Ereignis und/oder Zustand zu erkennen. Beispielsweise ist die Steuereinrichtung 4 ausgebildet, die Winkelgeschwindigkeit der mechanischen Vektorgröße mit einem Geschwindigkeitsschwellenwert zu vergleichen und bei Überschreiten des Geschwindigkeitsschwellenwerts das Ereignis- und/oder den Zustand zu erkennen. Ferner kann die Steuereinrichtung 4 ausgebildet sein, zu bestimmen, um welchen Änderungswinkel sich die mechanische Vektorgröße 3 insbesondere innerhalb eines bestimmten Zeitfensters geändert hat und diesen Änderungswinkel mit einem Winkelschwellenwert zu vergleichen, um das Ereignis- und/oder den Zustand zu erkennen.

Bei der Kickback-Erkennung kann die Steuereinrichtung 4 ferner ausgebildet sein, verschiedene Arten von Kickbacks zu unterscheiden. Steht beispielsweise unmittelbar ein Kickback bevor, der bei einem Rückwärtssägen oder Eintauchen auftritt, so dreht sich die mechanische Vektorgröße 3 (ausgehend von dem zweiten Richtungsbereich 15) im Gegenuhrzeigersinn, während sich die mechanische Vektorgröße 3 bei einem Kickback, der durch ein Einklemmen des Werkzeugs 1 im Werkstück 11 verursacht wird, im Uhrzeigersinn dreht. Die Steuereinrichtung 4 kann dementsprechend ausgebildet sein, die Drehrichtung der mechanischen Vektorgröße 3 bei der Erkennung des Ereignisses und oder Zustands zu berücksichtigen.

Ferner kann die Steuereinrichtung 4 ausgebildet sein, bei der Zustands- und/oder Ereigniserkennung auch einen Betrag der erfassten mechanischen Vektorgröße 3 zu berücksichtigen. Beispielsweise kann die Steuereinrichtung 4 ausgebildet sein, den Zustand und/oder das Ereignis nur dann zu erkennen, wenn der Betrag der mechanischen Vektorgröße 3 größer als ein Schwellenwert ist. Auf diese Weise kann verhindert werden, dass im Betrieb auftretende schwache Stöße fälschlicherweise als Kickback erkannt werden.

Zudem kann die Steuereinrichtung 4 ausgebildet sein, die Zeitdauer zu berücksichtigen, mit der die mechanische Vektorgröße 3 innerhalb eines bestimmten Richtungsbereichs 14, 15, 16 liegt. Beispielsweise kann die Steuereinrichtung 4 ausgebildet sein, den Zustand- und/oder das Ereignis nur dann zu erkennen, wenn die mechanische Vektorgröße länger als ein bestimmter Zeitschwellenwert in einem bestimmten Richtungsbereich 14, 15, 16 liegt.

Ferner kann die Steuereinrichtung 4 ausgebildet sein, anhand der Richtung der erfassten mechanischen Vektorgröße 3 zu bestimmen, ob ein Verschleißzustand vorliegt. Bei dem Verschleißzustand kann es sich insbesondere um einen Verschleißzustand des Werkzeugs 1 handeln. Die Steuereinrichtung 4 kann ausgebildet sein, einen Richtungsbereich bereitzustellen und, basierend darauf, ob sich die mechanische Vektorgröße 3 innerhalb oder außerhalb des Richtungsbereichs befindet, einen Verschleißzustand festzustellen. Exemplarisch kann die Steuereinrichtung 4 eine Richtungsumkehr, beispielsweise eine Kraftrichtungsumkehr, der mechanischen Vektorgröße 3 erkennen und daraus auf den Verschleißzustand schließen. Die Steuereinrichtung 4 kann dann über ein entsprechendes Signalmittel ein akustisches oder visuelles Signal ausgeben, dass anzeigt, dass der Verschleißzustand vorliegt.

Die vorstehend erläuterten konkreten Winkelangaben der Richtungsbereiche 14, 15, 16 sind rein exemplarisch zu verstehen. Je nach Typ und Aufbau des Elektrowerkzeugs 10 können die tatsächlichen Winkel variieren. Die tatsächlichen Winkel der Richtungsbereiche 14, 15, 16 können mittels Kalibrierung ermittelt werden. Die Kalibrierung kann beispielsweise bei der Entwicklung oder Herstellung des Elektrowerkzeugs und/oder durch den Benutzer erfolgen.

Zweckmäßigerweise ist die Steuereinrichtung 4 ausgebildet, eine Kalibrierung eines oder mehrerer Richtungsbereiche 14, 15, 16 vorzunehmen. Beispielsweise kann mittels der Benutzerschnittstelle 5 die Kalibrierung initiiert werden. Die Steuereinrichtung 4 kann daraufhin über die Antriebseinrichtung 7 das Werkzeug 1 antreiben und dabei über die Sensoreinrichtung 2 die mechanische Vektorgröße 3 erfassen. Basierend auf der erfassten mechanischen Vektorgröße 3 kann die Steuereinrichtung 4 dann einen Richtungsbereich und/oder einen oder mehrere Schwellenwerte erstellen und in einem Speicher der Steuereinrichtung 2 hinterlegen. Dieser Vorgang kann beispielsweise vorgenommen werden, wenn ein neues Werkzeug 1 montiert wird. Die Verschleißerkennung des Werkzeugs 1 kann so verbessert werden.

Im Folgenden wird auf die Sensoreinrichtung 2 und die Erfassung der mechanischen Vektorgröße 3 im Detail eingegangen.

Die Sensoreinrichtung 2 ist zweckmäßigerweise ausgebildet, die mechanische Vektorgröße 3 als wenigstens zweidimensionalen Vektor zu erfassen. Zu diesem Zweck ist die Sensoreinrichtung 2 ausgebildet, die der mechanischen Vektorgröße 3 zugrunde liegende mechanische Größe in wenigstens zwei verschiedenen Raumrichtungen zu messen. Bei den beiden Raumrichtungen handelt es sich beispielsweise um eine Raumrichtung, die parallel zur Vorschubrichtung 12 verläuft und eine Raumrichtung, die senkrecht zur Vorschubrichtung 12 verläuft. Zweckmäßigerweise sind beide Raumrichtungen senkrecht zur Axialrichtung der Abtriebswelle 8. Beispielsweise verfügt die Sensoreinrichtung 2 über wenigstens zwei Sensorelemente 25, 26. Zweckmäßigerweise dient jedes der Sensorelemente 25, 26 dazu, die zugrunde liegende mechanische Größe - also eine Kraft, eine Beschleunigung, eine Geschwindigkeit, eine Auslenkung, eine Deformation und/oder eine mechanische Spannung, in einer anderen Raumrichtung zu messen.

Die mechanische Vektorgröße 3 ist insbesondere ein Kraftvektor, ein Beschleunigungsvektor, ein Geschwindigkeitsvektor, ein Auslenkungsvektor, ein Deformationsvektor und/oder ein mechanischer Spannungsvektor oder Spannungstensor. Dementsprechend kann die Sensoreinrichtung 2 ausgebildet sein, in wenigstens zwei Raumrichtungen eine Kraft, eine Beschleunigung, eine Geschwindigkeit, eine Auslenkung, eine Deformation und/oder eine mechanische Spannung zu messen.

Die Sensoreinrichtung 2 kann insbesondere ein radiales Messlager 28 umfassen, mit dem beispielsweise die Abtriebswelle 8 gelagert ist. Das radiale Messlager 28 kann ausgebildet sein, mittels Kraft- oder Spannungssensoren, beispielsweise piezoresistiven Sensoren, die Kraft zwischen der Abtriebswelle 8 und dem Messlager 28 als die mechanische Vektorgröße 3 zu erfassen.

Alternativ oder zusätzlich dazu kann die Sensoreinrichtung 2 von der Abtriebswelle 8 beabstandete Distanzsensoren umfassen, die ausgebildet sind, die Auslenkung der Abtriebswelle 8 als die mechanische Vektorgröße 8 zu erfassen.

Ferner kann die Sensoreinrichtung 2 insbesondere an der Tragstruktur 21 befestigte Spannungssensoren, insbesondere Dehnungsmessstreifen (DMS), umfassen.

Grundsätzlich kann die Sensoreinrichtung 2 eingerichtet sein, die mechanische Vektorgröße 3 an einem beliebigen Teil innerhalb des vom Werkzeug 1 ausgehenden Kraftflusses zu messen. Der Kraftfluss verläuft exemplarisch von dem Werkzeug 1 über die Abtriebswelle 8, eine Lagereinrichtung 27, die Tragstruktur 21, das Gehäuse 6 und die Auflagefläche 9 zu dem Werkstück 11. Insbesondere ist die Sensoreinrichtung 2 ausgebildet, die mechanische Vektorgröße 3 zwischen zwei im Kraftfluss hintereinander liegenden Teilen zu messen.

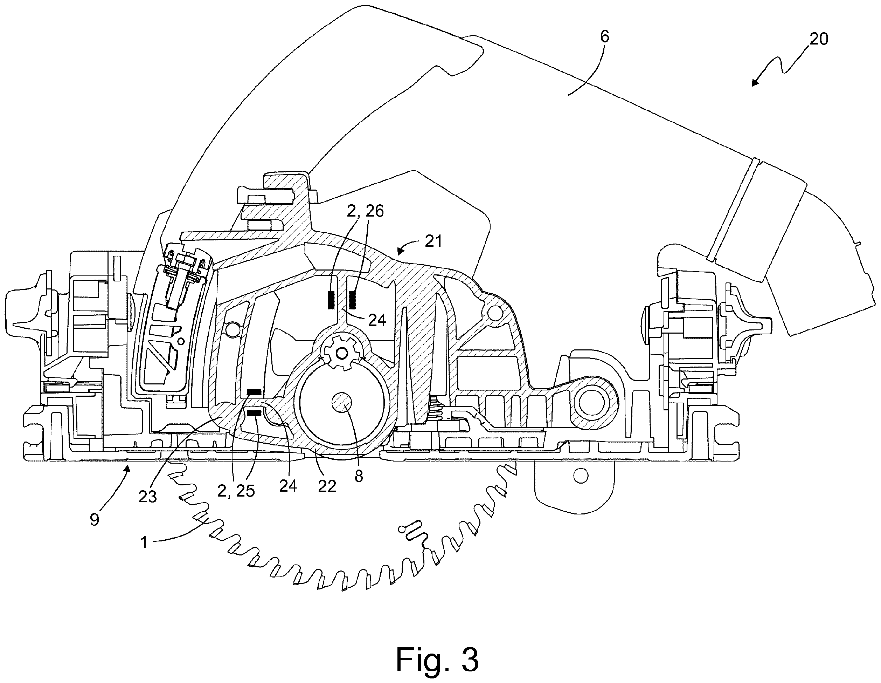

Die Figuren 3 bis 6 zeigen eine zweite, dritte, vierte und fünfte exemplarische Ausführungsform, bei der die Erfassung der mechanischen Vektorgröße 3 jeweils auf eine andere Art und Weise erfolgt. Bis auf die Ausbildung und Anordnung der Tragstruktur 21 und der Sensoreinrichtung 2 entspricht die zweite bis fünfte Ausführungsform der vorstehend diskutierten ersten Ausführungsform. Die vorstehend bereits im Zusammenhang mit der ersten Ausführungsform erläuterten Merkmale gelten auch für die zweite, dritte, vierte und fünfte Ausführungsform.

Die Figur 3 zeigt ein Elektrowerkzeug 20 gemäß der zweiten Ausführungsform. Bei der zweiten Ausführungsform umfasst die Sensoreinrichtung 2 zwei Sensorelemente 25, 26, die beide an der Tragstruktur 21 angeordnet sind. Beispielsweise sind die Sensorelemente 25, 26 an die Tragstruktur 21 geklebt.

Bei den Sensorelementen 25, 26 handelt es sich insbesondere um Sensoren zur Erfassung einer Deformation der Tragstruktur 21, die durch eine von der Abtriebswelle 8 auf die Tragstruktur 21 ausgeübte Kraft verursacht wird. Bei den Sensorelementen 25, 26 handelt es sich beispielsweise um Kraft-Spannungssensoren, insbesondere Dehnungsmessstreifen (DMS), Piezoelemente und/oder Lichtleitersensoren.

Zweckmäßigerweise sind die Sensorelemente 25, 26 an zwei relativ zur Abtriebswelle 8 radial nach außen verlaufenden Abschnitten 24 der Tragstruktur 21 angeordnet. Exemplarisch ist das Sensorelement 25 an einem horizontal verlaufenden Abschnitt 24 angeordnet, und das Sensorelement 26 ist an einem vertikal verlaufenden Abschnitt 24 angeordnet. Die Abschnitte 24 sind insbesondere stegförmig ausgebildet.

Die Abschnitte 24 verbinden zweckmäßigerweise einen ersten Teilabschnitt 22 und einem zweiten Teilabschnitt 23 der Tragstruktur 21 miteinander. Exemplarisch umgibt der erste Teilabschnitt 22 die Abtriebswelle 8. Insbesondere stellt der erste Teilabschnitt 22 ein Getriebegehäuse dar oder umfasst ein Getriebegehäuse. Vorzugsweise ist die Abtriebswelle 8 an dem ersten Teilabschnitt 22 gelagert. Der zweite Teilabschnitt 23 liegt in dem vom Werkzeug 1 ausgehenden Kraftfluss zweckmäßigerweise hinter dem - also stromabwärts vom - ersten Teilabschnitt 22.

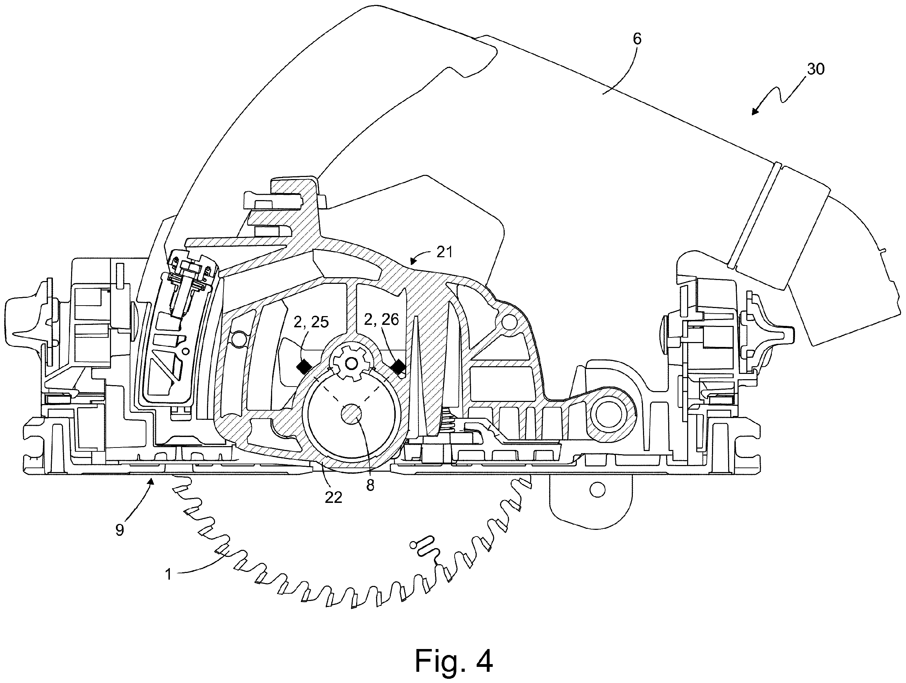

Die Figur 4 zeigt ein Elektrowerkzeug 30 gemäß der dritten Ausführungsform. Zweckmäßigerweise ist die Tragstruktur 21 wie bei der vorstehend diskutierten zweiten Ausführungsform ausgebildet.

Bei der dritten Ausführungsform umfasst die Sensoreinrichtung 2 zwei Sensorelemente 25, 26, die ausgebildet sind, die Auslenkung der Abtriebswelle 8 in zwei verschiedene Raumrichtungen zu erfassen. Vorzugsweise erfasst das Sensorelement 25 die Auslenkung der Abtriebswelle 8 in einer ersten Raumrichtung und das Sensorelement 26 erfasst die Auslenkung in einer insbesondere um 90 Grad relativ zur Abtriebswelle 8 gedrehten zweiten Raumrichtung.

Zweckmäßigerweise handelt es sich bei den Sensorelementen 25, 26 um Abstandssensoren, beispielsweise Wirbelstromsensoren, kapazitive Sensoren und/oder induktive Sensoren. Handelt es sich um induktive Sensoren, so können in oder an der Abtriebswelle 8 magnetische Partikel angeordnet sein.

Exemplarisch sind die beiden Sensorelemente 25, 26 an der Tragstruktur 21 angeordnet. Zweckmäßigerweise sind die Sensorelemente 25, 26 in Bohrungen angeordnet, insbesondere geschraubt, die vorzugsweise an der Tragstruktur 21 vorgesehen sind. Exemplarisch sind die beiden Sensorelemente 25, 26 an dem inneren Teilabschnitt 22 der Tragstruktur 21 angeordnet.

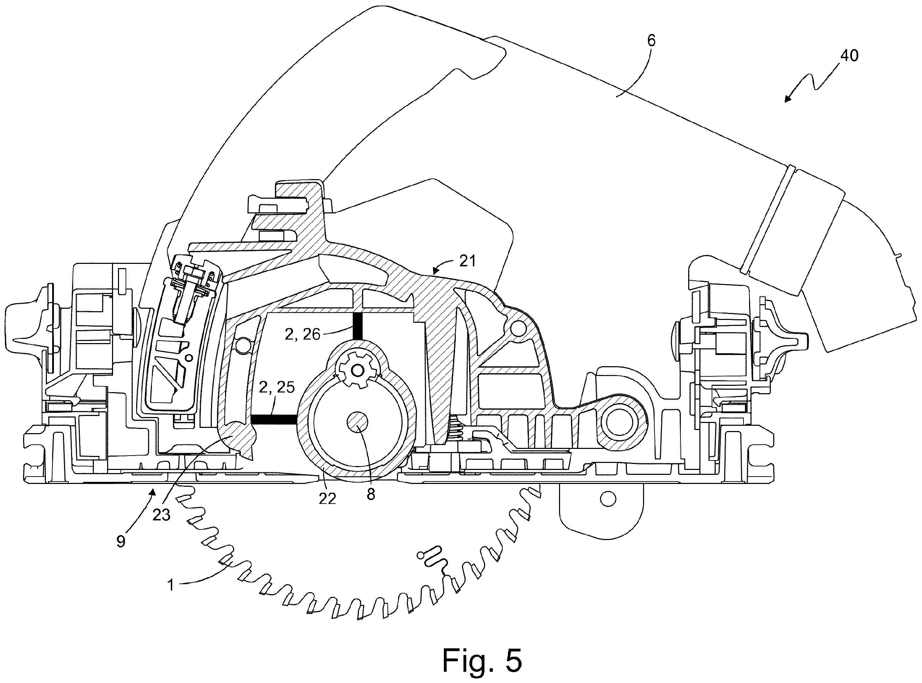

Die Figur 5 zeigt ein Elektrowerkzeug 40 gemäß einer vierten Ausführungsform. Die vierte Ausführungsform geht aus von einer Tragstruktur 21, wie sie vorstehend im Zusammenhang mit der zweiten Ausführungsform beschrieben ist, weist jedoch gegenüber der zweiten Ausführungsform insbesondere die nachstehend erläuterten Modifikationen auf.

So sind bei der vierten Ausführungsform die Sensorelemente 25, 26 zwischen dem ersten Teilabschnitt 22 und dem zweiten Teilabschnitt 23 der Tragstruktur 21 angeordnet. Insbesondere stellen die Sensorelemente 25, 26 Verbindungselemente dar, die den zweiten Teilabschnitt 23 mechanisch mit dem ersten Teilabschnitt 22 verbinden. Exemplarisch ersetzen die Sensorelemente 25, 26 die vorstehend im Zusammenhang mit der zweiten Ausführungsform diskutierten Abschnitte 24.

Zweckmäßigerweise sind die Sensorelemente 25, 26 als Kraftsensoren ausgebildet und messen die zwischen dem ersten Teilabschnitt 22 und dem zweiten Teilabschnitt 23 vorliegende Kraft in zwei verschiedenen Raumrichtungen. Zweckmäßigerweise sind die beiden Raumrichtungen orthogonal zueinander ausgerichtet. Insbesondere verläuft die erste Raumrichtung parallel zur Auflagefläche 9 und/oder Vorschubrichtung 12 und die zweite Raumrichtung verläuft senkrecht dazu.

Gemäß einer bevorzugten Ausgestaltung stellt der erste Teilabschnitt 22 ein Getriebegehäuse dar und wird über die Sensorelemente 25, 26, vorzugsweise ausschließlich über die Sensorelemente 25, 26, am zweiten Teilabschnitt 23 und/oder der restlichen Tragstruktur 21 aufgehängt.

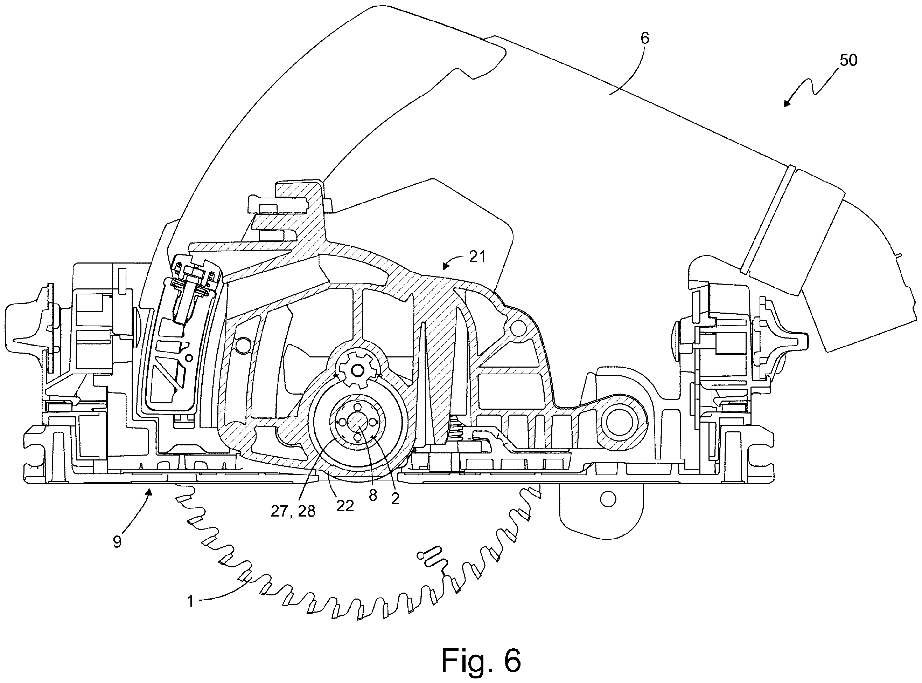

Die Figur 6 zeigt ein Elektrowerkzeug 50 gemäß einer fünften Ausführungsform. Zweckmäßigerweise ist die Tragstruktur 21 wie bei der vorstehend erläuterten zweiten Ausführungsform ausgebildet.

Die Figur 6 zeigt exemplarisch eine Lagereinrichtung 27. Zweckmäßigerweise ist die Lagereinrichtung 27 an der Tragstruktur 21 vorgesehen und lagert die Abtriebswelle 8 gegenüber der Tragstruktur 21. Die Lagereinrichtung 27 umfasst zweckmäßigerweise ein oder mehrere Lager 31, 32, insbesondere Radial- und/oder Radiaxlager, vorzugsweise Kugellager.

Zweckmäßigerweise ist wenigstens ein Lager 31, 32 der Lagereinrichtung 27 als Messlager 28, insbesondere radiales Messlager, ausgebildet und stellt damit die Sensoreinrichtung 2 dar. Vorzugsweise ist das Messlager 28 ausgebildet, eine zwischen der Abtriebswelle 8 und der Tragstruktur 21 vorliegende Kraft in wenigstens zwei verschiedenen Raumrichtungen zu messen. Beispielsweise verfügt das Messlager 28 über eine Mehrzahl von Sensorelementen, beispielsweise piezoresistiven Sensorelementen, insbesondere piezoresistiven Dünnschichtsensorelementen, die zweckmäßigerweise in Umfangsrichtung um die Abtriebswelle 8 herum angeordnet sind. Insbesondere sind die Sensorelemente an einer äußeren Lagerkomponente des Messlagers 28 - also einer relativ zur Tragstruktur 21 stationären Lagerkomponente bzw. einer sich nicht mit der Abtriebswelle 8 mitdrehenden Lagerkomponente, wie beispielsweise einem Außenring, angeordnet. Exemplarisch sind acht Sensorelemente vorgesehen, die jeweils um 45 Grad zueinander versetzt angeordnet sind.

Die Figur 6 zeigt die Abtriebswelle 8 zusammen mit zwei Lagern 31, 32 der Lagereinrichtung 27. Exemplarisch ist das erste Lager 31 im Bereich eines dem Werkzeug 1 zugeordneten distalen Endes der Abtriebswelle 8 angeordnet und das zweite Lager 32 ist im Bereich eines dem Werkzeug 1 abgewandten distalen Endes der Abtriebswelle 8 angeordnet.

Zweckmäßigerweise ist eines oder beide Lager 1, 2 als das vorstehend erläuterte Messlager 28 ausgebildet.

Alternativ oder zusätzlich zu der vorstehend erläuterten Ausgestaltung, bei der die Sensoreinrichtung 2 innen in einem oder mehreren Lagern 31, 32 integriert ist, kann die Sensoreinrichtung 2 auch zwischen einem oder mehreren Lagern 31, 32 und der Tragstruktur 21 angeordnet sein.

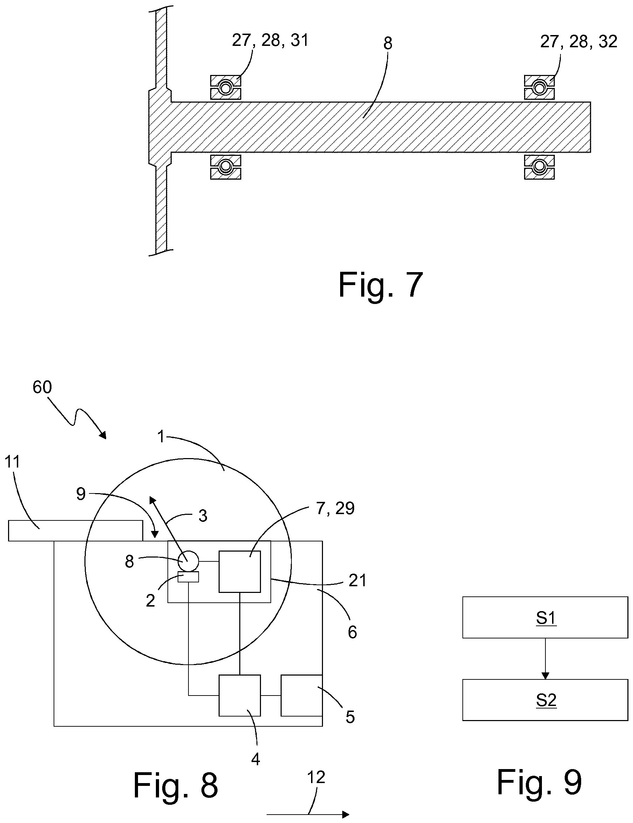

Die Figur 8 zeigt ein Elektrowerkzeug 60 gemäß einer sechsten Ausführungsform. Das Elektrowerkzeug 60 ist hier exemplarisch als stationäre Säge, insbesondere als Tischkreissäge ausgebildet. Das Elektrowerkzeug 60 umfasst die vorstehend bereits im Zusammenhang mit dem Elektrowerkzeug 10 diskutierten Merkmale. Ferner kann bei dem Elektrowerkzeug 60 die Sensoreinrichtung 2 und/oder Tragstruktur 21 in Entsprechung zu der zweiten bis fünften Ausführungsform ausgestaltet sein.

Exemplarisch dreht sich das Werkzeug 1 hier in Gegenuhrzeigersinn. Zweckmäßigerweise wird das Werkstück 11 bei der Bearbeitung so in das als Sägeblatt ausgebildete Werkzeug 1 hineingeschoben, dass die Sägezähne von oben nach unten in das Werkstück 11 sägen. In der Figur 8 ist eine entsprechende Vorschubrichtung 12 eingezeichnet. Die Richtungsbereiche 14, 15, 16 und/oder Richtungsschwellenwerte 17, 18 sind bei dem Elektrowerkzeug 60 entsprechend angepasst. Beispielsweise können die in der Figur 2 gezeigten Richtungsbereiche 14, 15, 16 und/oder Richtungsschwellenwerte 17, 18 um den Mittelpunkt des Diagramms punktgespiegelt sein.

Im Folgenden werden verschiedene Möglichkeiten diskutiert, wie auf ein erkanntes Ereignis und/oder einen erkannten Zustand reagiert werden kann. Zweckmäßigerweise kann jede dieser Möglichkeit bei jedem der vorstehend diskutierten Elektrowerkzeuge vorgesehen sein.

Vorzugsweise ist die Steuereinrichtung 4 ausgebildet, in Ansprechen auf das erkannte Ereignis und/oder Zustand ein entsprechendes Signal bereitzustellen. Die Steuereinrichtung 4 kann beispielsweise ausgebildet sein, das Signal in einem Speicher abzulegen und/oder über ein insbesondere akustisches oder visuelles Signalausgabemittel des Elektrowerkzeugs auszugeben. Bei dem abgelegten Signal kann es sich insbesondere um eine Datenaufzeichnung handeln, bei der durch die Sensoreinrichtung 2 erfasste Daten aufgezeichnet werden. Beispielsweise handelt es sich um eine Datenaufzeichnung zum Zwecke einer Unfallhergangserfassung.

Ferner kann die Steuereinrichtung 4 ausgebildet sein, in Ansprechen auf das erkannte Ereignis und/oder Zustand eine bestimmte Ansteuerung der Antriebseinrichtung 7 vorzunehmen, beispielsweise um zu bewirken, dass das Werkzeug 1 nicht mehr angetrieben wird und/oder abgebremst, insbesondere komplett abgebremst wird. Dies ist insbesondere sinnvoll, wenn das erkannte Ereignis ein Kickback-Ereignis ist. Das Abbremsen kann dabei insbesondere mit demselben Elektromotor erfolgen, mit dem das Werkzeug 1 sonst angetrieben wird.

Alternativ oder zusätzlich kann das Elektrowerkzeug ein Bremsmittel umfassen und die Steuereinrichtung ausgebildet sein, in Ansprechen auf das erkannte Ereignis und/oder Signal das Bremsmittel so anzusteuern, dass das Werkzeug 1 abgebremst wird.

Zweckmäßigerweise ist die Steuereinrichtung 4 ausgebildet, bei einem erkannten Kickback-Ereignis über die Antriebseinrichtung 7 und/oder das Bremsmittel ein Abbremsen des Werkzeugs 1 zu einem Zeitpunkt zu bewirken, in dem noch kein Rückstoß oder Rückschlag des Elektrowerkzeugs und/oder des Werkstücks 11 erfolgt ist. Beispielsweise kann das Abbremsen zu einem Zeitpunkt erfolgen, in dem, zurückkehrend zur Figur 2, der Richtungsschwellenwert 17 oder 18 bereits überschritten wurde, die mechanische Vektorgröße 3 vorzugsweise jedoch noch nicht in dem dritten Richtungsbereich 16 liegt. Auf diese Weise kann der durch den Kickback bewirkte Rückstoß oder Rückschlag vermindert oder ganz verhindert werden.

Ferner kann das Elektrowerkzeug 10, 60 eine Positioniereinrichtung 29 umfassen, die ausgebildet ist, das Werkzeug 1 wahlweise in eine Betriebsstellung oder eine Sicherheitsstellung zu positionieren. Die Steuereinrichtung 4 kann ausgebildet sein, in Ansprechen auf das erkannte Ereignis und/oder den erkannten Zustand die Positioniereinrichtung 29 anzusteuern, so dass das Werkzeug 1 in die Betriebsstellung oder die Sicherheitsstellung positioniert wird. Die Positioniereinrichtung 29 ist beispielsweise ausgebildet, das Werkzeug 1 zwischen der Betriebsstellung und der Sicherheitsstellung zu verfahren und/oder verschwenken. Zweckmäßigerweise ist das Werkzeug 1 in der Sicherheitsstellung weiter in das Gehäuse 6 positioniert als in der Betriebsstellung. Zweckmäßigerweise wird das Werkzeug 1 in Ansprechen auf ein Kickback-Ereignis in die Sicherheitsstellung positioniert.

Die Figur 9 zeigt ein Flussdiagramm eines Verfahrens zum Erkennen eines Ereignisses und/oder eines Zustands eines Elektrowerkzeugs 10, 20, 30, 40, 50, 60 mit einem als Sägeblatt oder Fräser ausgebildeten rotierbaren Werkzeug 1. Das Verfahren umfasst die Schritte: Erfassen, S1, einer mechanischen Vektorgröße 3, nämlich einer Kraft, einer Beschleunigung, einer Geschwindigkeit, einer Auslenkung, einer Deformation und/oder einer mechanische Spannung, die von einer vom Werkzeug 1 ausgehenden Kraft abhängt, und Erkennen des Ereignisses und/oder Zustands des Elektrowerkzeugs gemäß einer Richtungsänderung (und optional einer Richtung) der erfassten mechanischen Vektorgröße 3.

Zweckmäßigerweise wird das Verfahren mittels eines der vorstehend erläuterten Elektrowerkzeuge 10; 20; 30; 40; 50; 60 ausgeführt.

Vorzugsweise verfügt das Verfahren über einen weiteren Schritt, in dem eine der vorstehend diskutierten Reaktionen auf das erkannte Ereignis und/oder den erkannten Zustand ausgeführt wird.

## Patentansprüche

1. Elektrowerkzeug (10; 20; 30; 40; 50; 60) mit einem als Sägeblatt oder Fräser ausgebildeten rotierbaren Werkzeug (1), umfassend eine Sensoreinrichtung (2) zur Erfassung einer mechanischen Vektorgröße (3), wobei die mechanische Vektorgröße (3) eine Kraft, eine Beschleunigung, eine Geschwindigkeit, eine Auslenkung, eine Deformation und/oder eine mechanische Spannung umfasst und die mechanische Vektorgröße (3) von einer vom Werkzeug (1) ausgehenden Kraft abhängt, wobei die Richtung der erfassten Vektorgröße der Richtung, in die das Werkzeug (1) relativ zu einer anderen Komponente des Elektrowerkzeugs (10; 20; 30; 40; 50; 60) drängt, entspricht, sowie eine mit der Sensoreinrichtung (2) kommunikativ gekoppelte Steuereinrichtung (4), **dadurch gekennzeichnet, dass** die Steuereinrichtung (4) ausgebildet ist, ein Ereignis und/oder einen Zustand des Elektrowerkzeugs (10; 20; 30; 40; 50; 60) gemäß einer Richtungsänderung der mit der Sensoreinrichtung (2) erfassten mechanischen Vektorgröße (3) zu erkennen, wobei die Steuereinrichtung (4) ausgebildet ist, als das zu erkennende Ereignis und/oder den Zustand einen Kickback, ein Vorwärtssägen, ein Rückwärtssägen und/oder ein Eintauchen des Werkzeugs (1) in ein Werkstück (11) zu erkennen.

2. Elektrowerkzeug (10; 20; 30; 40; 50; 60) nach Anspruch 1, **dadurch gekennzeichnet, dass** die Steuereinrichtung (4) ausgebildet ist, wenigstens einen Richtungsbereich (14, 15, 16) bereitzustellen und das Ereignis und/oder den Zustand basierend darauf zu erkennen, ob die Richtung der mechanischen Vektorgröße (3) innerhalb oder außerhalb des Richtungsbereichs (14, 15, 16) liegt.

3. Elektrowerkzeug (10; 20; 30; 40; 50; 60) nach Anspruch 1 oder 2, **dadurch gekennzeichnet, dass** die Steuereinrichtung (4) ausgebildet ist, eine Mehrzahl von Richtungsbereichen (14, 15, 16) bereitzustellen und verschiedene Ereignisse und/oder Zustände basierend darauf zu erkennen, in welchem der Richtungsbereiche (14, 15, 16) die Richtung der mechanischen Vektorgröße (3) liegt.

4. Elektrowerkzeug (10; 20; 30; 40; 50; 60) nach Anspruch 2 oder 3, **dadurch gekennzeichnet, dass** die Steuereinrichtung (4) ausgebildet ist, eine Kalibrierung eines oder mehrerer Richtungsbereiche (14, 15, 16) vorzunehmen.

5. Elektrowerkzeug (10; 20; 30; 40; 50; 60) nach einem der Ansprüche 1 bis 4, **dadurch gekennzeichnet, dass** die Steuereinrichtung (4) ausgebildet ist, das Ereignis und/oder den Zustand basierend auf einer Winkelgeschwindigkeit und/oder einem Änderungswinkel der mechanischen Vektorgröße 3 zu erkennen.

6. Elektrowerkzeug (20; 30; 40) nach einem der Ansprüche 1 bis 5, **dadurch gekennzeichnet, dass** die Sensoreinrichtung (2) ein erstes Sensorelement (25) und ein zweites Sensorelement (26) umfasst, wobei das erste Sensorelement (25) ausgebildet ist, eine der mechanischen Vektorgröße (3) zugrunde liegende mechanische Größe in einer ersten Raumrichtung zu messen und das zweite Sensorelement (26) ausgebildet ist, die der mechanischen Vektorgröße (3) zugrunde liegende mechanische Größe in einer von der ersten Raumrichtung verschiedenen zweiten Raumrichtung zu messen.

7. Elektrowerkzeug (20; 30; 40) nach Anspruch 6, **dadurch gekennzeichnet, dass** das Elektrowerkzeug (20; 30; 40) ferner eine Tragstruktur (21) sowie eine an der Tragstruktur (21) gelagerte Abtriebswelle (8) umfasst, mit der das Werkzeug gekoppelt ist, wobei die Sensorelemente (25, 26) an der Tragstruktur (21) angeordnet sind.

8. Elektrowerkzeug (40) nach Anspruch 7, **dadurch gekennzeichnet, dass** die Tragstruktur (21) einen ersten Teilabschnitt (22), insbesondere ein Getriebegehäuse, und einen zweiten Teilabschnitt (23) umfasst und die beiden Sensorelemente (25, 26) jeweils als Verbindungselemente zwischen dem ersten Teilabschnitt (22) und dem zweiten Teilabschnitt (23) ausgebildet sind.

9. Elektrowerkzeug (50) nach einem der Ansprüche 1 bis 8, **dadurch gekennzeichnet, dass** die Sensoreinrichtung (2) ein Messlager (28) umfasst.

10. Elektrowerkzeug (10; 20; 30; 40; 50; 60) nach einem der Ansprüche 1 bis 9, **dadurch gekennzeichnet, dass** die Steuereinrichtung (4) ausgebildet ist, in Ansprechen auf das erkannte Ereignis und/oder den erkannten Zustand ein Signal bereitzustellen.

11. Elektrowerkzeug (10; 20; 30; 40; 50; 60) nach einem der Ansprüche 1 bis 10, **dadurch gekennzeichnet, dass** das Elektrowerkzeug (10; 20; 30; 40; 50; 60) eine Antriebseinrichtung (7) zum Antrieb des Werkzeugs (1) umfasst und die Steuereinrichtung (4) ausgebildet ist, in Ansprechen auf das erkannte Ereignis und/oder den erkannten Zustand die Antriebseinrichtung (7) anzusteuern, um den Antrieb des Werkzeugs (1) zu ändern, insbesondere, um das Werkzeug (1) abzubremsen.

12. Elektrowerkzeug (10; 60) nach einem der Ansprüche 1 bis 11, **dadurch gekennzeichnet, dass** das Elektrowerkzeug eine Positioniereinrichtung (29) umfasst, die ausgebildet ist, das Werkzeug (1) wahlweise in eine Betriebsstellung oder eine Sicherheitsstellung zu positionieren und die Steuereinrichtung (4) ausgebildet ist, in Ansprechen auf das erkannte Ereignis und/oder den erkannten Zustand die Positioniereinrichtung (29) anzusteuern, so dass das Werkzeug (1) in die Betriebsstellung oder die Sicherheitsstellung positioniert wird.

13. Verfahren zum Erkennen eines Ereignisses und/oder Zustands eines Elektrowerkzeugs (10; 20; 30; 40; 50; 60) mit einem als Sägeblatt oder Fräser ausgebildeten rotierbaren Werkzeug (1), umfassend die Schritte: Erfassen (S1) einer mechanischen Vektorgröße (3), wobei die mechanische Vektorgröße (3) eine Kraft, eine Beschleunigung, eine Geschwindigkeit, eine Auslenkung, eine Deformation und/oder eine mechanische Spannung umfasst und die mechanische Vektorgröße (3) von einer vom Werkzeug (1) ausgehenden Kraft abhängt, wobei die Richtung der erfassten Vektorgröße der Richtung, in die das Werkzeug (1) relativ zu einer anderen Komponente des Elektrowerkzeugs (10; 20; 30; 40; 50; 60) drängt, entspricht, **gekennzeichnet durch** Erkennen (S2) des Ereignisses und/oder Zustands des Elektrowerkzeugs (10; 20; 30; 40; 50; 60) gemäß einer Richtungsänderung der erfassten mechanischen Vektorgröße (3), wobei das Ereignis und/oder der Zustand einen Kickback, ein Vorwärtssägen, ein Rückwärtssägen und/oder ein Eintauchen des Werkzeugs (1) in ein Werkstück (11) umfasst.

## Claims

1. Power tool (10; 20; 30; 40; 50; 60) with a rotatable tool (1) designed as a saw blade or milling cutter, comprising a sensor device (2) for detecting a mechanical vector quantity (3), wherein the mechanical vector quantity (3) comprises a force, an acceleration, a velocity, a deflection, a deformation and/or a mechanical stress, and the mechanical vector quantity (3) depends on a force emanating from the tool (1), wherein the direction of the detected vector quantity corresponds to the direction, in which the tool (1) urges relative to another component of the power tool (10; 20; 30; 40; 50; 60), and a control device (4) communicatively coupled to the sensor device (2), **characterized in that** the control device (4) is adapted to recognize an event and/or a state of the power tool (10; 20; 30; 40; 50; 60) according to a change of direction of the mechanical vector quantity (3) detected by the sensor device (2), wherein the control device (4) is adapted to recognize, as the event and/or the state to be recognized, a kickback, a forward sawing, a backward sawing and/or a plunging of the tool (1) into a workpiece (11) .

2. Power tool (10; 20; 30; 40; 50; 60) according to claim 1, **characterised in that** the control device (4) is adapted to provide at least one directional range (14, 15, 16) and to recognize the event and/or state based on whether the direction of the mechanical vector quantity (3) is within or outside the directional range (14, 15, 16).

3. Power tool (10; 20; 30; 40; 50; 60) according to claim 1 or 2, **characterized in that** the control device (4) is adapted to provide a plurality of directional ranges (14, 15, 16) and to recognize different events and/or states based on which of the directional ranges (14, 15, 16) the direction of the mechanical vector quantity (3) lies in.

4. Power tool (10; 20; 30; 40; 50; 60) according to claim 2 or 3, **characterized in that** the control device (4) is designed to carry out a calibration of one or more directional ranges (14, 15, 16).

5. Power tool (10; 20; 30; 40; 50; 60) according to any one of claims 1 to 4, **characterized in that** the control device (4) is adapted to recognize the event and/or state based on an angular velocity and/or an angle of change of the mechanical vector quantity (3).

6. Power tool (20; 30; 40) according to one of claims 1 to 5, **characterized in that** the sensor device (2) comprises a first sensor element (25) and a second sensor element (26), the first sensor element (25) being adapted to measure a mechanical quantity underlying the mechanical vector quantity (3) in a first spatial direction and the second sensor element (26) being adapted to measure the mechanical quantity underlying the mechanical vector quantity (3) in a second spatial direction different from the first spatial direction.

7. Power tool (20; 30; 40) according to claim 6, **characterized in that** the power tool (20; 30; 40) further comprises a support structure (21) and an output shaft (8) mounted on the support structure (21), to which output shaft (8) the tool is coupled, wherein the sensor elements (25, 26) are arranged on the support structure (21).

8. Power tool (40) according to claim 7, **characterized in that** the support structure (21) comprises a first subsection (22), in particular a gear housing, and a second subsection (23), and the two sensor elements (25, 26) are each designed as connecting elements between the first subsection (22) and the second subsection (23).

9. Power tool (50) according to any one of claims 1 to 8, **characterized in that** the sensor device (2) comprises a measuring bearing (28).

10. Power tool (10; 20; 30; 40; 50; 60) according to any one of claims 1 to 9, **characterised in that** the control device (4) is adapted to provide a signal in response to the recognized event and/or state.

11. Power tool (10; 20; 30; 40; 50; 60) according to any one of claims 1 to 10, **characterized in that** the power tool (10; 20; 30; 40; 50; 60) comprises a drive device (7) for driving the tool (1) and the control device (4) is adapted to control the drive device (7) in response to the recognized event and/or the recognized state in order to change the driving of the tool (1), in particular to brake the tool (1).

12. Power tool (10; 60) according to any one of claims 1 to 11, **characterised in that** the power tool comprises a positioning device (29) which is adapted to position the tool (1) selectively in an operating position or a safety position and the control device (4) is adapted to control the positioning device (29) in response to the recognized event and/or the recognized state so that the tool (1) is positioned in the operating position or the safety position.

13. Method for recognizing an event and/or state of an power tool (10; 20; 30; 40; 50; 60) with a rotatable tool (1) designed as a saw blade or milling cutter, comprising the steps: detecting (S1) a mechanical vector quantity (3), wherein the mechanical vector quantity (3) comprises a force, an acceleration, a velocity, a deflection, a deformation and/or a mechanical stress and the mechanical vector quantity (3) depends on a force emanating from the tool (1), wherein the direction of the detected vector quantity corresponds to the direction, in which the tool (1) urges relative to another component of the power tool (10; 20; 30; 40; 50; 60), **characterised by** recognizing (S2) the event and/or state of the power tool (10; 20; 30; 40; 50; 60) according to a change of direction of the detected mechanical vector quantity (3), wherein the event and/or the state comprises a kickback, a forward sawing, a backward sawing and/or a plunging of the tool (1) into a workpiece (11).

## Revendications

1. Outil électrique (10 ; 20 ; 30 ; 40 ; 50 ; 60) avec un outil rotatif (1) réalisé en tant que lame de scie ou fraise, comprenant un dispositif de capteur (2) destiné à détecteur une grandeur de vecteur mécanique (3), dans lequel la grandeur de vecteur mécanique (3) comprend une force, une accélération, une vitesse, une déviation, une déformation et/ou une tension mécanique et la grandeur de vecteur mécanique (3) dépend d'une force partant de l'outil (1), dans lequel la direction de la grandeur de vecteur détectée correspond à la direction, dans laquelle l'outil (1) pousse par rapport à un autre composant de l'outil électrique (10 ; 20 ; 30 ; 40 ; 50 ; 60), ainsi qu'un dispositif de commande (4) couplé en communication avec le dispositif de capteur (2), **caractérisé en ce que** le dispositif de commande (4) est réalisé pour identifier un événement et/ou un état de l'outil électrique (10 ; 20 ; 30 ; 40 ; 50 ; 60) selon une modification de direction de la grandeur de vecteur mécanique (3) détectée avec le dispositif de capteur (2), dans lequel le dispositif de commande (4) est réalisé pour identifier en tant que l'événement à identifier et/ou l'état, un recul, un sciage vers l'avant, un sciage vers l'arrière et/ou un enfoncement de l'outil (1) dans une pièce (11).

2. Outil électrique (10 ; 20 ; 30 ; 40 ; 50 ; 60) selon la revendication 1, **caractérisé en ce que** le dispositif de commande (4) est réalisé pour fournir au moins une zone de direction (14, 15, 16) et pour identifier l'événement et/ou l'état sur la base du fait de savoir si la direction de la grandeur de vecteur mécanique (3) se situe à l'intérieur ou à l'extérieur de la zone de direction (14, 15, 16).

3. Outil électrique (10 ; 20 ; 30 ; 40 ; 50 ; 60) selon la revendication 1 ou 2, **caractérisé en ce que** le dispositif de commande (4) est réalisé pour fournir une multitude de zones de direction (14, 15, 16) et pour identifier différents événements et/ou états en se basant sur la zone de direction (14, 15, 16), dans laquelle la direction de la grandeur de vecteur mécanique (3) se trouve.

4. Outil électrique (10 ; 20 ; 30 ; 40 ; 50 ; 60) selon la revendication 2 ou 3, **caractérisé en ce que** le dispositif de commande (4) est réalisé pour effectuer un étalonnage d'une ou de plusieurs zones de direction (14, 15, 16).

5. Outil électrique (10 ; 20 ; 30 ; 40 ; 50 ; 60) selon l'une quelconque des revendications 1 à 4, **caractérisé en ce que** le dispositif de commande (4) est réalisé pour identifier l'événement et/ou l'état sur la base d'une vitesse angulaire et/ou d'un angle de modification de la grandeur de vecteur mécanique (3).

6. Outil électrique (20 ; 30 ; 40) selon l'une quelconque des revendications 1 à 5, **caractérisé en ce que** le dispositif de capteur (2) comprend un premier élément de capteur (25) et un deuxième élément de capteur (26), dans lequel le premier élément de capteur (25) est réalisé pour mesurer dans une première direction spatiale une grandeur mécanique sous-jacente à la grandeur de vecteur mécanique (3) et le deuxième élément de capteur (26) est réalisé pour mesurer dans une deuxième direction spatiale différente de la première direction spatiale la grandeur mécanique sous-jacente à la grandeur de vecteur mécanique (3).

7. Outil électrique (20 ; 30 ; 40) selon la revendication 6, **caractérisé en ce que** l'outil électrique (20 ; 30 ; 40) comprend en outre une structure porteuse (21) ainsi qu'un arbre de sortie (8) monté sur la structure porteuse (21), auquel l'outil est couplé, dans lequel les éléments de capteur (25, 26) sont disposés sur la structure porteuse (21).

8. Outil électrique (40) selon la revendication 7, **caractérisé en ce que** la structure porteuse (21) comprend une première section partielle (22), en particulier un boîtier de transmission, et une deuxième section partielle (23) et les deux éléments de capteur (25, 26) sont réalisés respectivement en tant qu'éléments de liaison entre la première section partielle (22) et la deuxième section partielle (23).

9. Outil électrique (50) selon l'une quelconque des revendications 1 à 8, **caractérisé en ce que** le dispositif de capteur (2) comprend un palier de mesure (28).

10. Outil électrique (10 ; 20 ; 30 ; 40 ; 50 ; 60) selon l'une quelconque des revendications 1 à 9, **caractérisé en ce que** le dispositif de commande (4) est réalisé pour fournir en réponse à l'événement identifié et/ou à l'état identifié un signal.

11. Outil électrique (10 ; 20 ; 30 ; 40 ; 50 ; 60) selon l'une quelconque des revendications 1 à 10, **caractérisé en ce que** l'outil électrique (10 ; 20 ; 30 ; 40 ; 50 ; 60) comprend un dispositif d'entraînement (7) destiné à entraîner l'outil (1) et le dispositif de commande (4) est réalisé pour piloter le dispositif d'entraînement (7) en réponse à l'événement identifié et/ou à l'état identifié pour modifier l'entraînement de l'outil (1), en particulier pour ralentir l'outil (1).

12. Outil électrique (10 ; 60) selon l'une quelconque des revendications 1 à 11, **caractérisé en ce que** l'outil électrique comprend un dispositif de positionnement (29), qui est réalisé pour positionner l'outil (1) au choix dans une position de fonctionnement ou une position de sécurité, et le dispositif de commande (4) est réalisé pour piloter le dispositif de positionnement (29) en réponse à l'événement identifié et/ou à l'état identifié de telle sorte que l'outil (1) est positionné dans la position de fonctionnement ou la position de sécurité.

13. Procédé destiné à identifier un événement et/ou un état d'un outil électrique (10 ; 20 ; 30 ; 40 ; 50 ; 60) avec un outil rotatif (1) réalisé en tant que lame de scie ou fraise, comprenant les étapes : de détection (S1) d'une grandeur de vecteur mécanique (3), dans lequel la grandeur de vecteur mécanique (3) comprend une force, une accélération, une vitesse, une déviation, une déformation et/ou une tension mécanique et la grandeur de vecteur mécanique (3) dépend d'une force partant de l'outil (1), dans lequel la direction de la grandeur de vecteur détectée correspond à la direction, dans laquelle l'outil (1) pousse par rapport à un autre composant de l'outil électrique (10 ; 20 ; 30 ; 40 ; 50 ; 60), **caractérisé par** l'identification (S2) de l'événement et/ou de l'état de l'outil électrique (10 ; 20 ; 30 ; 40 ; 50 ; 60) selon une modification de direction de la grandeur de vecteur mécanique (3) détectée, dans lequel l'événement et/ou l'état comprend un recul, un sciage vers l'avant, un sciage vers l'arrière et/ou un enfoncement de l'outil (1) dans une pièce (11).
